# EUROPEAN PATENT APPLICATION

(11) **EP 4 819 436 A1**
(43) Date of publication of application: **07.10.2026**
(21) Application number: 25188469.8
(22) Date of filing: 09.07.2025
(51) Int. Cl.: H02J 7/00, B60L 58/12, B60L 58/14, B60L 58/20, H01M 10/42

(54) **BATTERY RECHARGING METHOD, BATTERY, VEHICLE AND NON-TRANSITORY COMPUTER-READABLE STORAGE MEDIUM**

(30) Priority: 02.04.2025 CN 202510417884; 19.05.2025 WO PCT/CN2025/095828
(71) Applicant: Eve Energy Co., Ltd., Huizhou, Guangdong 516006 (CN)
(72) Inventor: LUO, Dayi, Huizhou, Guangdong 516006 (CN); WANG, Haibo, Huizhou, Guangdong 516006 (CN)
(74) Representative: Berggren Oy

(57) **Abstract**

A battery recharging method, for a battery in a vehicle, wherein the battery is configured to provide a low-voltage power supply, and the method includes: monitoring (110) a preset event for triggering a recharging request, wherein the preset event includes at least a first preset event for a non-sleeping state of the vehicle and a second preset event for a sleeping state of the vehicle; sending (120), in response to the preset event, the recharging request to a target module in the vehicle corresponding to the preset event, to request the target module to charge the battery; and sending (130) a preset instruction to the target module to instruct the target module to cease charging the battery in response to the battery being charged by the target module meeting a preset condition.

## Description

### Technical Field

The present invention relates to, but are not limited to, the technical field of batteries, and specifically relates to a battery recharging method, a battery, a vehicle, and a non-transitory computer-readable storage medium.

### Background

New energy vehicles are favored by users for their affordable prices and high intelligence. At present, most new energy vehicles are equipped with batteries that provide low-voltage power supply. During the driving process, the battery can be recharged by the vehicle's power battery. After the vehicle is parked and dormant, the battery still needs to power some functional modules in the vehicle, such as chips, electronic devices, sensors, driving recorders, etc.

However, when the vehicle is parked and dormant for a long time, the battery cannot be recharged by the power battery, making the battery prone to power loss due to long-term power consumption, and unable to respond in time when the vehicle is started next time, affecting the user experience.

### Summary

The present invention is defined by the independent claims as appended. Developments are set forth in the dependent claims.

An objective of the present invention is to provide a battery recharging method, applied to a battery, the battery being disposed in a vehicle and configured to provide a low-voltage power supply, wherein the battery recharging method includes:
monitoring a preset event for triggering a recharging request, wherein the preset event includes at least a first preset event for a non-sleeping state of the vehicle and a second preset event for a sleeping state of the vehicle;
sending, in response to the preset event, the recharging request to a target module in the vehicle corresponding to the preset event, to instruct the target module to charge the battery; and
sending a preset instruction to the target module to instruct the target module to cease charging the battery in response to the battery being charged by the target module meeting a preset condition.

In some examples, the first preset event includes: a state of charge (SOC) of the battery being lower than a preset SOC threshold and/or a voltage of the battery being lower than a preset voltage threshold.

In some examples, the second preset event includes at least one of: the battery triggering a timed wake-up instruction, a state of charge of the battery being lower than a preset SOC threshold, and a voltage of the battery being lower than a preset voltage threshold.

In some examples, the sending, in response to the preset event, the recharging request to the target module in the vehicle corresponding to the preset event includes:
sending, in response to the preset event being the first preset event, a first recharging request to a vehicle controller of the vehicle to instruct the vehicle controller to control a target battery of the vehicle to charge the battery.

In some examples, the sending, in response to the preset event, the recharging request to the target module in the vehicle corresponding to the preset event includes:
waking up, in response to the preset event being the second preset event, a vehicle controller of the vehicle and sending a first recharging request to the vehicle controller of the vehicle, or
waking up, in response to the preset event being the second preset event, a power battery of the vehicle and sending a second recharging request to the power battery to instruct the power battery to charge the battery.

In some examples, after the sending, in response to the preset event, the recharging request to the target module in the vehicle corresponding to the preset event, the method further includes:
detecting, in response to the target module successfully charging the battery, a charged current value of the battery;
determining a current demand value according to the charged current value, and sending an adjustment instruction to the target module according to the current demand value to instruct the target module to adjust a charging voltage to perform a constant current charging for the battery.

In some examples, after the sending, in response to the preset event, the recharging request to the target module in the vehicle corresponding to the preset event, the method further includes:
sending, in response to the target module failing to charge the battery, a power-off instruction to the target module to instruct the target module to perform a power-off operation; and
ceasing, in response to determining that the target module has been powered off, providing the low-voltage power supply, and forbidding performing monitoring the preset event for triggering the recharging request.

An objective of the present invention is to provide a battery recharging method, applied to a vehicle, the vehicle configured with a battery, the battery configured to provide a low-voltage power supply, wherein the battery recharging method includes:
receiving, by a target module, a recharging request sent from the battery; wherein the recharging request is triggered when the battery detects a preset event corresponding to the target module, and the preset event includes at least a first preset event for a non-sleeping state of the vehicle and a second preset event for a sleeping state of the vehicle;
charging, by the target module, the battery in response to the recharging request; wherein the target module is configured to cease charging the battery in response to a preset instruction sent by the battery in response to the battery being charged meeting a preset condition.

**In** some examples, battery recharging method further includes:
in response to receiving, by the target module, an adjustment instruction sent by the battery according to a current demand value, adjusting, by the target module, a charging voltage to perform a constant current charging for the battery; wherein the current demand value is determined by the battery according to a charged current value, and the charging current value is detected on the battery when it is determined that the target module has successfully charged the battery.

In some examples, battery recharging method further includes:
performing, in response to the target module having received a power-off instruction sent from the battery, a power-off operation according to the power-off instruction.

An objective of the present invention is to provide a battery, including:
a memory,
a processor, and
computer-readable instructions stored in the memory and executable by the processor, wherein the computer-readable instructions when executed by the processor implement the above battery recharging method.

An objective of the present invention is to provide a vehicle including:
a battery,
a memory,
a processor, and
computer-readable instructions stored in the memory and executable by the processor, wherein the computer-readable instructions when executed by the processor implement the above battery recharging method.

An objective of the present invention is to provide a non-transitory computer-readable storage medium, storing computer-readable instructions, wherein the computer-readable instructions when executed by a processor implement the above battery recharging method.

In the battery recharging method, battery, vehicle and non-transitory computer-readable storage medium provided by the present invention, the method can send a recharging request to the target module in the vehicle corresponding to the preset event when the preset event occurs by monitoring the preset event for triggering the recharging request, thereby instructing the target module to charge the battery. Since the preset event includes a first preset event for the non-sleeping state of the vehicle and a second preset event for the sleeping state of the vehicle, whether the vehicle is in a non-sleeping state or a sleeping state, a recharging request can be sent to the corresponding target module in the vehicle by monitoring the preset event, thereby instructing the target module to charge the battery. In addition, when the battery being charged by the target module meets the preset condition, a preset instruction is sent to the target module to instruct the target module to cease charging the battery, thereby realizing that while promptly instructing the target module in the vehicle to charge the battery, the charging operation can also be ceased in a planned manner, thereby avoiding the target module from being depleted due to long-term battery charging, thereby providing a battery charging solution that can improve the user experience and is more intelligent.

### Brief Description of the Drawings

In order to more clearly illustrate the technical solutions of the embodiments of the present invention, the drawings required for use in the description of the embodiments of the present invention will be briefly introduced below. Obviously, the drawings described below are only some embodiments of the present invention. For those skilled in this field, other drawings can be obtained based on these drawings without any creative work.
FIG. 1 is a schematic diagram of a use environment of a battery recharging method according to an embodiment of the present invention.
FIG. 2 is a flowchart of an implementation of a battery recharging method according to an embodiment of the present invention.
FIG. 3 is a flowchart of an implementation of a battery recharging method according to another embodiment of the present invention.
FIG. 4 is a structural block diagram of a battery according to an embodiment of the present invention.
FIG. 5 is a structural block diagram of a vehicle according to an embodiment of the present invention.

### Detailed Description of the Embodiments

For example, most new energy vehicles are currently equipped with a battery that provides a low-voltage power supply. During the driving process of the vehicle, the battery can be recharged by the vehicle's power battery. After the vehicle is parked and dormant, the battery still needs to power some functional modules in the vehicle, such as chips, electronic devices, sensors, and driving recorders in the vehicle.

However, when the vehicle is parked and dormant for a long time, the battery cannot be recharged by the power battery, making the battery prone to power loss due to long-term power consumption, and unable to respond in time when the vehicle is started next time, affecting the user experience.

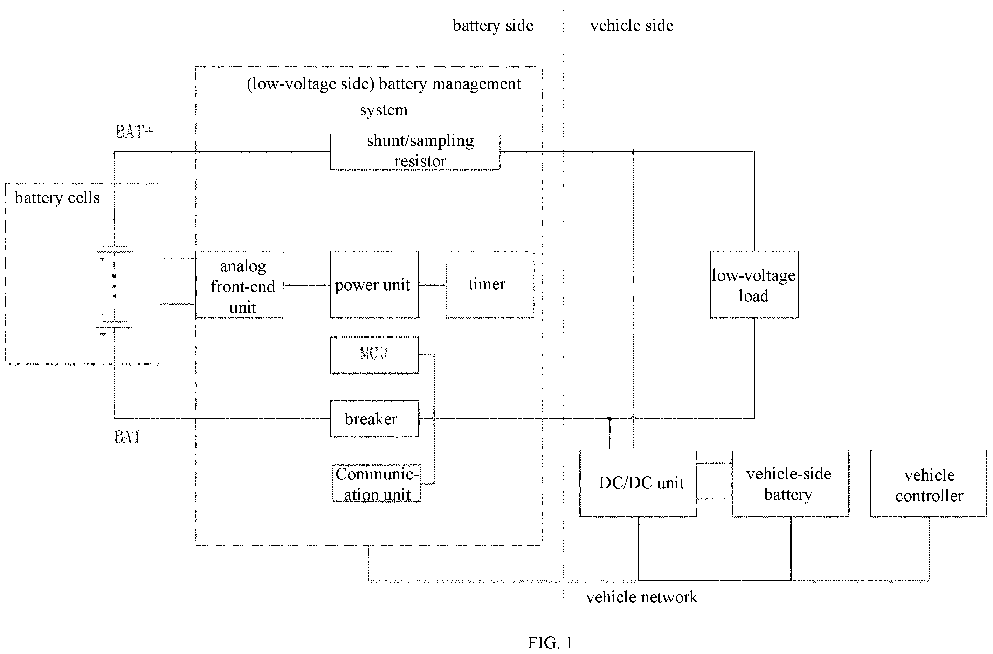

In order to solve the above technical problems, the present embodiment provides a battery recharging method, which can not only improve the user experience, but also has a higher degree of intelligence. In order to facilitate understanding of the battery recharging method according to the present embodiment, please refer to a schematic diagram of a use environment of a battery recharging method shown in FIG. 1. FIG. 1 shows the connections between the battery and the vehicle. In order to facilitate understanding of the scheme, in FIG. 1, the use environment of the battery recharging method can be divided into the battery side and the vehicle side according to the working principles or control subjects of the battery, the low-voltage load and the battery on the vehicle side.

It is understandable that the battery side and the vehicle side shown in FIG. 1 are only for the convenience of understanding the scheme. In actual implementation, the battery and the vehicle are not isolated or separated. In addition, the battery is configured in the vehicle to provide power to the low-voltage loads in the vehicle, that is, a low-voltage power supply. Based on this, the battery side and vehicle side shown in FIG. 1 cannot constitute an implementation limitation of the battery recharging method provided in this embodiment.

In FIG. 1, the battery side includes a battery management system, which can also be called a low-voltage side battery management system, which is used to control the charging and discharging operations of the battery cells. In all embodiments of the present invention, unless otherwise specified, the battery management system of the battery and the low-voltage side battery management system each refer to the battery management system in the battery. Similarly, a battery management system can also be configured in the battery on the vehicle side (not shown in the figures), and the battery management system in a power battery and the battery management system of a battery are two completely different battery management systems.

Exemplarily, during the driving process of the vehicle, the battery management system/low-voltage side battery management system of the battery can use the power of the battery cells on the battery side to power the unit modules in the battery management system/low-voltage side battery management system through the power supply unit. In addition, it can also power the low-voltage loads on both sides of the vehicle, such as chips, sensors, etc. in the vehicle. In this process, the vehicle-side battery can output direct current through the direct current (DC)/DC unit, and the battery management system/low-voltage side battery management system can use the direct current to charge the battery cells in time, thereby maintaining sufficient power on the battery side. When the vehicle is parked and dormant, the vehicle-side battery does not output direct current through the DC/DC unit, at this time, the battery management system/low-voltage side battery management system on the battery side uses the power of the battery cells on the battery side to power its own unit modules and the low-voltage loads on both sides of the vehicle, the power of the battery cells on the battery side gradually decreases. If the vehicle is parked and dormant for a long time, it may cause the battery side to be exhausted, or even a power shortage. In order to avoid battery exhaustion, the battery recharging method provided in this embodiment can be executed by the battery management system/low-voltage side battery management system on the battery side in FIG. 1. The battery management system/low-voltage side battery management system can monitor a preset event for triggering the recharging request, and when the preset event occurs, it can send a recharging request to the target module in the vehicle corresponding to the preset event, thereby instructing the target module to charge the battery. Since the preset event includes a first preset event when the vehicle is in a non-sleeping state and a second preset event when the vehicle is in a sleeping state, whether the vehicle is in a non-sleeping state or a sleeping state, a recharging request can be sent to the corresponding target module in the vehicle by monitoring the preset event, thereby instructing the target module to charge the battery. When the battery being charged by the target module meets the preset condition, a preset instruction is sent to the target module to instruct the target module to cease charging the battery, thereby realizing that the target module in the vehicle is promptly instructed to charge the battery, and the charging operation can be ceased in a planned manner, thereby avoiding the target module from being depleted due to long-term battery recharging, thereby providing a battery recharging solution that can improve the user experience and is more intelligent.

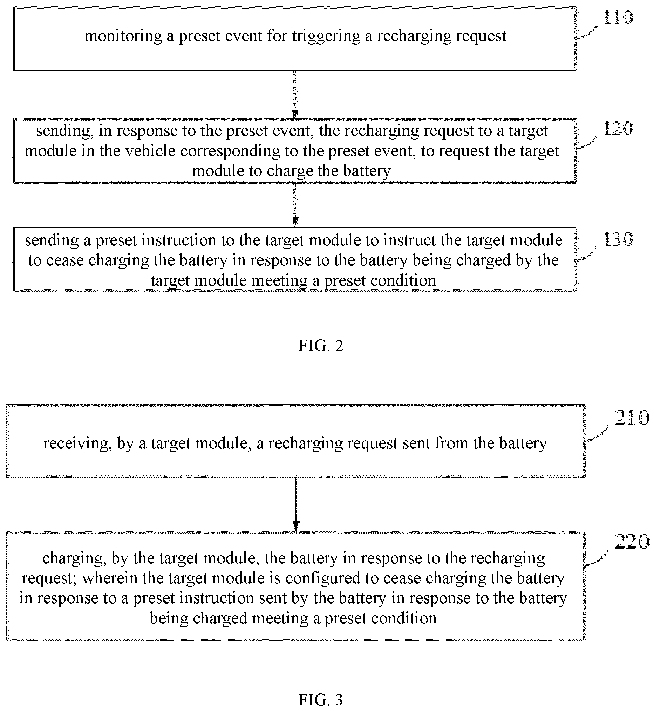

The following only takes the battery management system in the battery as an example of the execution subject, and describes in detail a battery recharging method provided in this embodiment through specific implementations. It can be understood that in all the embodiments of the application, the battery specifically refers to the one at the battery side in FIG. 1, that is, the battery includes at least a plurality of battery cells, and a battery management system/low-voltage side battery management system. The vehicle side battery may be the vehicle's power battery, or it may be a battery pack, energy storage device, etc. that is additionally configured on the vehicle, and is not limited here. FIG. 2 shows a flowchart of an implementation of a battery recharging method according to an embodiment of the present invention. As shown in FIG. 2, the battery recharging method includes the following steps:
Step 110, monitoring a preset event for triggering a recharging request.

In Step 110, the preset event includes at least a first preset event when the vehicle is in a non-sleeping state, and a second preset event when the vehicle is in a sleeping state.

In this embodiment, the recharging request generally refers to a request for requesting electric energy to charge a battery, that is, the recharging request can also be understood as a request for charging.

In a specific implementation, a corresponding monitoring strategy may be configured in the battery management system of the battery to monitor the preset event. For example, a corresponding monitoring function script is configured according to the first preset event and the second preset event, and by configuring the monitoring function script in the battery management system, the microprogrammed control unit (MCU) in the battery management system executes the script, thereby realizing the monitoring of the preset event.

As an embodiment, the first preset event includes: the state of charge of the battery is lower than a preset SOC threshold and/or the voltage of the battery is lower than a preset voltage threshold.

Exemplarily, in conjunction with the example shown in FIG. 1, an analog front-end unit is provided in the battery management system on the battery side. In actual use, the analog front-end unit can perform detections, such as current detection, voltage detection, and temperature detection on the battery cells, and then send the detected data to the MCU. Based on this, the MCU can calculate the state of charge and/or voltage of the battery according to the data detected by the analog front-end unit. In this way, when the state of charge of the battery is lower than the preset SOC threshold, and/or the voltage of the battery is lower than the preset voltage threshold, the recharging request can be triggered.

For example, when the vehicle is in the OFF position, the vehicle controller has not issued a power-off command or the vehicle network is in a normal state, and the vehicle-side battery is in normal operation (non-sleeping state). When the battery management system on the battery side recognizes that the SOC or voltage drops to a certain threshold, it actively sends a recharging request to the vehicle-side battery or vehicle controller on the vehicle side.

As an embodiment, the second preset event includes at least one of: a battery triggering a timed wake-up instruction, a remaining battery power lower than a preset SOC threshold, and a battery voltage lower than a preset voltage threshold.

Exemplarily, in conjunction with the example shown in FIG. 1, a timer is provided in the battery management system on the battery side, and when the vehicle is parked and dormant, a corresponding wake-up time or wake-up cycle can be set by the timer, and then the wake-up instruction can be triggered regularly/periodically by the timer.

For example, when the vehicle is parked and in a sleeping state, when the timer records that the timing or trigger cycle has been reached, the timer triggers a wake-up instruction to the MCU, which then wakes up the MCU to send a recharging request to the vehicle-side battery or vehicle controller on the vehicle side.

For another example, in conjunction with FIG. 1, when the vehicle is in the OFF position, the vehicle controller sends a power-off command or the vehicle network is in "Bus-Sleep Mode", and the battery management system of the vehicle-side battery switches to the sleeping state. At this time, the timer has not yet expired, but the vehicle consumes abnormal power during the sleep mode. For example, wild cats frequently trigger the vehicle's sentry mode, causing the battery side to continuously consume power, resulting in the actual battery power being too low. At this time, the analog front-end unit in the battery management system can trigger the fault detection function for the sleeping state, and then wake up the power unit to power the MCU, so that the MCU can trigger a recharging request to the vehicle-side battery or the vehicle controller on the vehicle side.

Step 120, sending, in response to the preset event, the recharging request to a target module in the vehicle corresponding to the preset event, to request the target module to charge the battery.

In Step 120, the target module generally refers to a module in the vehicle that can charge the battery. For example, it may be the vehicle-side battery, and more specifically be a battery management system of the vehicle-side battery. Another example is a vehicle controller, where the vehicle-side battery is controlled by the vehicle controller to charge the battery.

In this embodiment, since the first and second preset events may correspond to the non-sleeping state and the sleeping state of the vehicle, in order to be able to timely and efficiently recharge the battery, by setting the correspondence between the first and second preset events and target modules, it is possible to ensure that the battery is recharged in a timely manner while waking up as few modules in the vehicle as possible, thereby shortening the response time of the recharging request.

Exemplarily, in conjunction with the relationship between the battery and the vehicle as shown in FIG. 1, in a specific implementation, when the preset event is the first preset event, the target module corresponding to the first preset event may be the module with the highest control authority in the vehicle, such as a vehicle controller, an on-board terminal, etc. When the preset event is the second preset event, the target module corresponding to the second preset event may be a vehicle-side battery in the vehicle, such as a power battery in the vehicle, a battery pack, energy storage device, etc. configured separately in the vehicle. It is easy to understand that when the target module is charging the battery, whether the target module is a vehicle controller or a battery management system of a vehicle-side battery, the DC/DC unit can be used to convert the electric energy provided by the vehicle-side battery into direct current suitable for charging the battery, and the battery management system on the battery side uses the direct current to charge the plurality of battery cells in the battery.

As an example, taking the battery management system of a vehicle power battery as the target module, when responding to a recharging request, if the battery management system of the power battery determines that the state of charge of the power battery is greater than a certain threshold, for example, if the state of charge of the power battery is greater than 30%, a start command is issued to the DC/DC unit. At this time, the battery management system on the battery side can report the requested voltage and requested current to the DC/DC unit based on the lowest voltage among a plurality of battery cells. After receiving the working instruction, requested voltage, and requested current, the DC/DC unit outputs the corresponding direct current according to the requested voltage and requested current.

As an embodiment, Step 120 specifically includes:
when the preset event is the first preset event, sending a first recharging request to the vehicle controller of the vehicle; when the preset event is the second preset event, awakening the vehicle controller of the vehicle and sending the first recharging request to the vehicle controller of the vehicle, or awakening the power battery of the vehicle and sending a second recharging request to the power battery. The first recharging request is used to instruct the vehicle controller to control the target battery of the vehicle to charge the battery; the second recharging request is used to instruct the power battery to charge the battery.

In this embodiment, since the first preset event is a preset event triggered when the vehicle is in a non-sleeping state, the vehicle controller in the vehicle is not powered off or in a sleeping state at this time, and the first recharging request can be directly sent to the vehicle controller of the vehicle, instructing the vehicle controller to control the target battery of the vehicle to charge the battery. Here, the target battery includes the vehicle's power battery and/or a battery pack, energy storage device, etc. configured separately in the vehicle.

As an example, in some special vehicles with many applicable scenarios and rich uses, such as RVs and transport trucks, the vehicle's endurance can be improved by additional battery packs and energy storage devices configured in the vehicle. Based on this, when the vehicle is in a non-sleeping state, the vehicle controller is the module with the highest authority in the vehicle. Therefore, by directly sending the first recharging request to the vehicle's vehicle controller, the vehicle controller can be instructed to control the vehicle's power battery and/or additional battery packs, energy storage devices, etc. configured in the vehicle to charge the battery.

As another example, in contrast to the first preset event, the second preset event is a preset event triggered when the vehicle is in a sleeping state, so the vehicle controller in the vehicle has been powered off or sleeping. At this time, after waking up the vehicle controller of the vehicle, a first recharging request can be sent to the awakened vehicle controller to instruct the vehicle controller to control the target battery of the vehicle to charge the battery. **In** order to shorten the response time for recharging the battery, in this embodiment, it is also possible to directly awake the power battery of the vehicle and send a second recharging request to the power battery to instruct the power battery to charge the battery.

**In** other embodiments, when the preset event is the second preset event, the vehicle controller and the power battery of the vehicle may be awakened at the same time, and the first recharging request is sent to the vehicle controller of the vehicle or the second recharging request is sent to the power battery. In this way, not only the vehicle controller and the battery management system of the power battery can be awakened at the same time, but also the vehicle controller can be used to perform discharge detection on the power battery to avoid excessive discharge of the power battery.

Step 130, sending a preset instruction to the target module to instruct the target module to cease charging the battery in response to the battery being charged by the target module meeting a preset condition.

In Step 130, the preset condition is used to describe that the charge of the battery has met the charge required to monitor the preset event within a specified time. For example, the preset condition may be that the battery charge is much greater than the battery over-discharge protection charge. For another example, the preset condition may be that the battery charge is 100%.

In this embodiment, when the battery being charged by the target module meets the preset condition, the target module can be instructed to cease charging the battery by sending a preset instruction to the target module. In this way, it can not only ensure that the battery can monitor the preset event within the specified time, but also cease the target module from using the power of the vehicle-side battery in time to avoid excessive consumption of the power of the vehicle-side battery.

In the above scheme, by monitoring the preset event for triggering the recharging request, a recharging request can be sent to the target module in the vehicle corresponding to the preset event when the preset event occurs, thereby instructing the target module to charge the battery. Since the preset event includes a first preset event when the vehicle is in a non-sleeping state and a second preset event when the vehicle is in a sleeping state, whether the vehicle is in a non-sleeping state or a sleeping state, a recharging request can be sent to the corresponding target module in the vehicle by monitoring the preset event, thereby instructing the target module to charge the battery. Meanwhile, when the battery being charged by the target module meets the preset condition, a preset instruction is sent to the target module to instruct the target module to cease charging the battery, thereby realizing that the target module in the vehicle is promptly instructed to charge the battery, and the charging operation can be ceased in a planned manner, thereby avoiding the target module from being depleted due to long-term battery recharging, thereby providing a battery recharging solution that can improve the user experience and is more intelligent.

As an embodiment, after Step 120, the following Steps 1.1 to 1.2 may also be included as follows:
Step 1.1, detecting, in response to the target module successfully charging the battery, a charged current value of the battery;
Step 1.2, determining a current demand value according to the charged current value, and sending a corresponding adjustment instruction to the target module according to the current demand value to instruct the target module to adjust a charging voltage to perform a constant current charging for the battery.

As an example, in conjunction with FIG. 1, taking the battery management system of the vehicle power battery as an example, when responding to the recharging request, if the battery management system of the power battery determines that the state of charge of the power battery is greater than a certain threshold, for example, if the state of charge of the power battery is greater than 30%, a start command is issued to the DC/DC unit. At this time, the battery management system on the battery side can report the requested voltage and requested current to the DC/DC unit according to the lowest voltage among a plurality of battery cells. After receiving the working instruction, the requested voltage and the requested current, the DC/DC unit outputs the corresponding direct current according to the requested voltage and the requested current. The battery management system in the battery can detect the charging state of the battery cells through the analog front-end unit, such as detecting the charged current value of the battery cells, and then send an adjustment instruction to the target module according to the current demand value. The target module adjusts the charging voltage according to the adjustment instruction, and then charges the battery with a constant current through the DC/DC unit.

As an embodiment, the following Steps 2.1 and 2.2 may be further included after Step 120 as follows:
Step 2.1, sending, in response to the target module failing to charge the battery, a power-off instruction to the target module to instruct the target module to perform a power-off operation;
Step 2.2, ceasing, in response to determining that the target module has been powered off, providing the low-voltage power supply, and forbidding monitoring the preset event for triggering the recharging request.

In conjunction with the example shown in FIG. 1, in order to avoid the battery side repeatedly waking up the target module on the vehicle side, resulting in abnormal power consumption, in this embodiment, when it is determined that the target module has failed to charge the battery, the battery management system of the battery needs to request the target module to power off, and after confirming that the vehicle side where the target module is located has powered off normally, the battery management system of the battery can disconnect by controlling the circuit breaker, thereby disconnecting the low-voltage power supply output, and forbidding performing the step of monitoring the preset event for triggering the recharging request, thereby avoiding severe battery depletion.

In a specific implementation, whether the target module is powered off can be determined based on whether a corresponding message is returned by the target module in response to a power-off instruction.

Exemplarily, as shown in the example of FIG. 1, taking the target module as the vehicle controller as an example, when the vehicle controller fails to charge the battery, the battery sends a power-off instruction to the vehicle controller to instruct the vehicle controller to perform a power-off operation. When the vehicle controller completes the power-off operation according to the power-off instruction, it returns a vehicle network release message to the battery. The battery receives the vehicle network release message to determine that the target module has been powered off, and then ceases providing low-voltage power supply, and forbidding performing the step of monitoring the preset event for triggering the recharging request.

It is understandable that when the target module fails to charge the battery, it may mean that the power of the battery on the vehicle side is insufficient to charge the battery. Therefore, the battery management system of the battery needs to request the target module to power off. After confirming that the power is off normally on the vehicle side where the target module is located, the battery management system of the battery can be disconnected by controlling the circuit breaker, thereby disconnecting the low-voltage power supply output, and forbidding performing the step of monitoring the preset event for triggering the recharging request. This can avoid serious battery depletion, avoid repeated awakening of the target module on the vehicle side, and avoid battery depletion on the vehicle side.

FIG. 3 shows a flowchart of an implementation of a battery recharging method according to another embodiment of the present invention. The difference from the embodiment of FIG. 2 is that the execution subject of the battery recharging method according to this embodiment is a vehicle equipped with a battery, and the battery is used to provide a low-voltage power supply. In conjunction with the example shown in FIG. 1, the execution subject of this embodiment may be at the vehicle side, and may be the vehicle controller and/or the vehicle battery on the vehicle side. As shown in FIG. 3, the battery recharging method according to this embodiment includes following steps.

Step 210, receiving, by a target module, a recharging request sent from the battery.

In Step 210, the recharging request is triggered when the battery detects a preset event, and the preset event at least includes a first preset event when the vehicle is in a non-sleeping state and a second preset event when the vehicle is in a sleeping state. The target module corresponds to the preset event.

In this embodiment, the recharging request generally refers to a request for requesting to charging a battery by electric energy, that is, the recharging request can also be understood as a request for charging.

For example, in conjunction with the embodiments of FIG. 1 and FIG. 2, when the preset event is the first preset event, the target module may be the vehicle controller. When the preset event is the second preset event, the target module may be the vehicle controller and/or the battery management system of the vehicle-side battery.

It is easy to understand that Step 210 of this embodiment corresponds to Step 120 of the embodiment of FIG. 2. In specific implementation, the corresponding recharging request response strategy can be configured in the battery management system of the vehicle controller and the vehicle-side battery, and the battery can be charged by responding to the recharging request.

Step 220, charging, by the target module, the battery in response to the recharging request; wherein the target module is configured to cease charging the battery in response to a preset instruction sent by the battery in response to the battery being charged meeting a preset condition.

It is easy to understand that Step 220 of this embodiment corresponds to Step 130 of the embodiment of FIG. 2.

In a specific implementation, the preset condition is used to describe that the battery charge has met the power required to monitor the preset event within a specified time. For example, the preset condition may be that the battery charge is much greater than the battery over-discharge protection power. For another example, the preset condition may be that the battery charge is 100%.

It is easy to understand that since Steps 210 to 220 provided in this embodiment correspond to Steps 120 to 130 in the embodiment of FIG. 1, more implementations and beneficial effects of this embodiment can refer to the embodiment content corresponding to Steps 120 to 130 in FIG. 1, and will not be repeated here.

In some embodiments, the preset condition may be a charging time threshold for the target module to charge the battery. Here, the charging time threshold may also be used to describe whether the battery charge has met the amount of electricity required to monitor a preset event within a specified time. Based on this, the target module may time the battery charge, and then determine that the battery being charged meets the preset condition when the charging time is not less than the charging time threshold. At this point, the target module may trigger the preset instruction to cease charging the battery.

As an embodiment, the battery recharging method also includes: when an adjustment instruction sent by the battery according to a current demand value is received through the target module, the charging voltage is adjusted through the target module to perform constant current charging for the battery; wherein the current demand value is determined by the battery according to the charged current value, and the charged current value is detected by the battery when it is determined that the target module has successfully charged the battery.

As an example, in conjunction with FIG. 1, taking the battery management system of the vehicle power battery as an example, when responding to the recharging request, if the battery management system of the power battery determines that the state of charge of the power battery is greater than a certain threshold, for example, if the state of charge of the power battery is greater than 30%, a start command is issued to the DC/DC unit. At this time, the battery management system on the battery side can report the requested voltage and requested current to the DC/DC unit according to the lowest voltage among a plurality of battery cells. After receiving the working instruction, the requested voltage and the requested current, the DC/DC unit outputs the corresponding direct current according to the requested voltage and the requested current. The battery management system in the battery can detect the charging state of the battery cells through the analog front-end unit, such as detecting the charged current value of the battery cells, and then send an adjustment instruction to the target module according to the changed current demand value. The target module adjusts the charging voltage according to the adjustment instruction, and then charges the battery with a constant current through the DC/DC unit.

As an embodiment, the battery recharging method further includes: in response to receiving a power-off instruction sent by the battery through the target module, performing a power-off operation according to the power-off instruction.

In this embodiment, the power-off instruction may be triggered by the battery management system of the battery when it is determined that the target module fails to charge the battery. Here, when the target module receives the power-off instruction, it performs a power-off operation by responding to the power-off instruction.

In conjunction with the example shown in FIG. 1, in order to avoid the battery side repeatedly waking up the target module on the vehicle side, resulting in abnormal power consumption, in this embodiment, when it is determined that the target module has failed to charge the battery, the battery management system of the battery needs to request the target module to power off, and after confirming that the vehicle side where the target module is located has powered off normally, the battery management system of the battery can control the circuit breaker to disconnect, thereby disconnecting the low-voltage power supply output, and forbidding performing the step of monitoring the preset event for triggering the recharging request, thereby avoiding severe battery depletion.

It is easy to understand that the execution subject of the steps provided in this embodiment is a vehicle, which can correspond to the steps in the embodiment of FIG. 2. Therefore, in the specific implementation, the corresponding embodiments of FIGs. 1 to 2 can be referred to, and the steps and effects of the battery recharging method in the embodiment of FIG. 3 can be implemented accordingly, so they will not be repeated here.

A person of ordinary skill in the art can understand that all or part of the steps in the above method can be completed by instructing related hardware (such as a processor) through a program, and the program can be stored in a non-transitory computer-readable storage medium, such as a read-only memory, a disk or an optical disk. Optionally, all or part of the steps in the above embodiment can also be implemented using one or more integrated circuits. Accordingly, each module/unit in the above embodiment can be implemented in the form of hardware, such as implementing its corresponding functions through an integrated circuit, or in the form of a software function module, such as implementing its corresponding functions through a processor executing a program/instruction stored in a memory. The present invention is not limited to any particular form of combination of hardware and software.

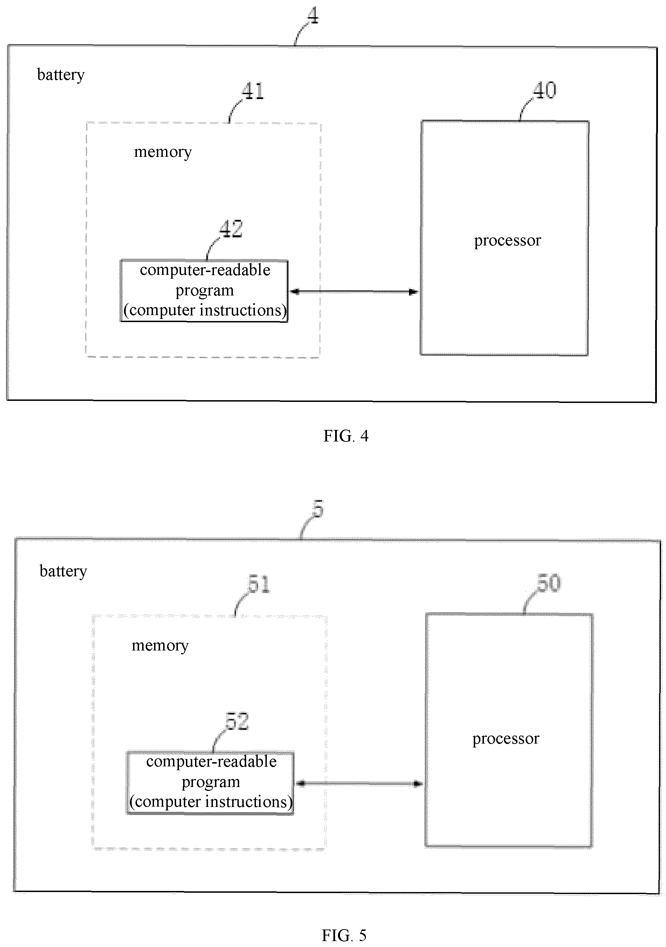

FIG. 4 is a structural block diagram of a battery according to an embodiment of the present invention. As shown in FIG. 4, the battery 4 of this embodiment includes: a processor 40, a memory 41, and a computer-readable program (or computer instructions) 42 stored in the memory 41 and executable on the processor 40, such as a program for the battery recharging method. The computer-readable instructions 42 when executed by the processor 40 implement the battery recharging method shown in FIG. 2. Please refer to the relevant description in the embodiment corresponding to FIG. 2 for details, which will not be repeated here.

FIG. 5 is a structural block diagram of a vehicle according to an embodiment of the present invention. As shown in FIG. 5, the vehicle 5 of this embodiment includes: a battery, a processor 50, a memory 51, and a computer-readable program (or computer instructions) 52 stored in the memory 51 and executable on the processor 50, such as a program of the battery recharging method. The computer-readable instructions 52 when executed by the processor 50 implement the battery recharging method shown in FIG. 2. Please refer to the relevant description in the embodiment corresponding to FIG. 2 for details, which will not be repeated here.

The battery and the vehicle may include, but are not limited to, a processor and a memory. Those skilled in the art will appreciate that FIG. 4 is only an example of a battery 4 and FIG. 5 is only an example of a vehicle 5, and do not constitute a limitation on the battery 4 or the vehicle 5, and they may include more or less components than shown in the figures, or combine certain components, or different components, for example, the vehicle may also include input and output devices, network access devices, buses, etc.

The processor may be a central processing unit (CPU), other general-purpose processors, digital signal processors (DSP), application-specific integrated circuits (ASIC), field-programmable gate arrays (FPGA) or other programmable logic devices, discrete gate or transistor logic devices, discrete hardware components, etc. A general-purpose processor may be a microprocessor or any conventional processor, etc.

The memory may be an internal storage unit of the battery 4 or the vehicle 5, such as a hard disk or memory of the battery 4 or the vehicle 5. The memory may also be an external storage device for the battery 4 or the vehicle 5, such as a plug-in hard disk, a smart media card (SMC), a secure digital (SD) card, a flash card, etc. equipped on the battery 4 or the vehicle 5. Further, the memory may include both an internal storage unit of the battery 4 or the vehicle 5 and an external storage device for the battery 4 or the vehicle 5. The memory is used to store the computer program and other programs and data required by the vehicle. The memory may also be used to temporarily store data that has been output or is to be output.

In one embodiment, a non-transitory computer-readable storage medium is provided, on which computer-readable instructions are stored. When the computer-readable instructions are executed by a processor, the steps of the above-mentioned battery recharging method are implemented.

Those of ordinary skill in the art can understand that all or part of the processes in the above-mentioned embodiment methods can be completed by instructing related hardware through computer-readable instructions, and the computer-readable instructions can be stored in a readable storage medium, and the readable storage medium includes a non-volatile readable storage medium and a volatile readable storage medium. When the computer-readable instructions are executed, they may include the processes of the embodiments of the above-mentioned methods. Any reference to memory, storage, database or other media used in the embodiments provided in this application may include non-volatile and/or volatile memory. Non-volatile memory may include read-only memory (ROM), programmable ROM (PROM), electrically programmable ROM (EPROM), electrically erasable programmable ROM (EEPROM) or flash memory. Volatile memory may include random access memory (RAM) or external cache memory. By way of illustration and not limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), synchronous link DRAM (SLDRAM), memory bus direct RAM (RDRAM), direct memory bus dynamic RAM (DRDRAM), and memory bus dynamic RAM (RDRAM), etc.

## Claims

1. A battery recharging method, applied to a battery, the battery being disposed in a vehicle and configured to provide a low-voltage power supply, **characterized in that** the battery recharging method comprises:
monitoring (110) a preset event for triggering a recharging request, wherein the preset event comprises at least a first preset event for a non-sleeping state of the vehicle and a second preset event for a sleeping state of the vehicle;
sending (120), in response to the preset event, the recharging request to a target module in the vehicle corresponding to the preset event, to instruct the target module to charge the battery; and
sending (130) a preset instruction to the target module to instruct the target module to cease charging the battery in response to the battery being charged by the target module meeting a preset condition.

2. The battery recharging method according to claim 1, wherein the first preset event comprises: a state of charge (SOC) of the battery being lower than a preset SOC threshold and/or a voltage of the battery being lower than a preset voltage threshold.

3. The battery recharging method according to claim 1, wherein the second preset event comprises at least one of: the battery triggering a timed wake-up instruction, a state of charge of the battery being lower than a preset SOC threshold, and a voltage of the battery being lower than a preset voltage threshold.

4. The battery charging method according to claim 2, wherein, the sending, in response to the preset event, the recharging request to the target module in the vehicle corresponding to the preset event comprises:
sending, in response to the preset event being the first preset event, a first recharging request to a vehicle controller of the vehicle to instruct the vehicle controller to control a target battery of the vehicle to charge the battery.

5. The battery charging method according to claim 3, wherein, the sending, in response to the preset event, the recharging request to the target module in the vehicle corresponding to the preset event comprises:
waking up, in response to the preset event being the second preset event, a vehicle controller of the vehicle and sending a first recharging request to the vehicle controller of the vehicle, or
waking up, in response to the preset event being the second preset event, a power battery of the vehicle and sending a second recharging request to the power battery to instruct the power battery to charge the battery.

6. The battery recharging method according to any one of claims 1 to 5, wherein after the sending, in response to the preset event, the recharging request to the target module in the vehicle corresponding to the preset event, the method further comprises:
detecting (1.1), in response to the target module successfully charging the battery, a charged current value of the battery;
determining (1.2) a current demand value according to the charged current value, and sending an adjustment instruction to the target module according to the current demand value to instruct the target module to adjust a charging voltage to perform a constant current charging for the battery.

7. The battery charging method according to claim 6, wherein after the sending, in response to the preset event, the recharging request to the target module in the vehicle corresponding to the preset event, the method further comprises:
sending (2.1), in response to the target module failing to charge the battery, a power-off instruction to the target module to instruct the target module to perform a power-off operation; and
ceasing (2.2), in response to determining that the target module has been powered off, providing the low-voltage power supply, and forbidding performing monitoring the preset event for triggering the recharging request.

8. A battery recharging method, applied to a vehicle, the vehicle configured with a battery, the battery configured to provide a low-voltage power supply, **characterized in that** the battery recharging method comprises:
receiving (210), by a target module, a recharging request sent from the battery; wherein the recharging request is triggered when the battery detects a preset event corresponding to the target module, and the preset event comprises at least a first preset event for a non-sleeping state of the vehicle and a second preset event for a sleeping state of the vehicle;
charging (220), by the target module, the battery in response to the recharging request; wherein the target module is configured to cease charging the battery in response to a preset instruction sent by the battery in response to the battery being charged meeting a preset condition.

9. The battery recharging method according to claim 8, further comprising:
in response to receiving, by the target module, an adjustment instruction sent by the battery according to a current demand value, adjusting, by the target module, a charging voltage to perform a constant current charging for the battery; wherein the current demand value is determined by the battery according to a charged current value, and the charging current value is detected on the battery when it is determined that the target module has successfully charged the battery.

10. The battery recharging method according to claim 9, further comprising:
performing, in response to the target module having received a power-off instruction sent from the battery, a power-off operation according to the power-off instruction.

11. A battery (4), **characterized by** comprising:
a memory (41),
a processor (40), and
computer-readable instructions (42) stored in the memory and executable by the processor, wherein the computer-readable instructions (42) when executed by the processor (40) implement the battery recharging method according to any one of claims 1 to 7.

12. A vehicle (5), **characterized by** comprising:
a battery,
a memory (51),
a processor (50), and
computer-readable instructions (52) stored in the memory and executable by the processor (50), wherein the computer-readable instructions (52) when executed by the processor (50) implement the battery recharging method according to any one of claims 1 to 10.

13. A non-transitory computer-readable storage medium, storing computer-readable instructions, **characterized in that** the computer-readable instructions when executed by a processor implement the battery recharging method according to any one of claims 1 to 10.
